(19) Europäisches Patentamt / European Patent Office / Office européen des brevets

(11) **EP 2 019 125 B1**

(12) **EUROPEAN PATENT SPECIFICATION**

(45) Date of publication and mention
of the grant of the patent:
**05.07.2017 Bulletin 2017/27**

(51) Int Cl.:
*C08L 7/00* $^{(2006.01)}$    *C08L 9/00* $^{(2006.01)}$
*C08L 9/06* $^{(2006.01)}$    *B60C 1/00* $^{(2006.01)}$
*B60C 13/00* $^{(2006.01)}$    *B60C 15/00* $^{(2006.01)}$

(21) Application number: **08013177.4**

(22) Date of filing: **22.07.2008**

(54) **Rubber composition and run flat tire using the same**

Gummimischung und Notlaufreifen damit

Composition en caoutchouc et pneu de roulage à plat l'utilisant

(84) Designated Contracting States:
**DE FR**

(30) Priority: **26.07.2007 JP 2007194268**

(43) Date of publication of application:
**28.01.2009 Bulletin 2009/05**

(73) Proprietor: **Sumitomo Rubber Industries, Ltd.
Hyogo-ken (JP)**

(72) Inventor: **Hochi, Kazuo
Chuo-ku
Kobe-shi
Hyogo 651-0071 (JP)**

(74) Representative: **Manitz Finsterwald Patentanwälte
PartmbB
Postfach 31 02 20
80102 München (DE)**

(56) References cited:
**EP-A- 1 707 595      JP-A- 2007 070 371
JP-A- 2007 302 865    US-A1- 2007 006 956**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a rubber composition for side reinforcement excellent in run flat performance, and a run flat tire using the same.

Description of the Background Art

A conventional run flat tire has a structure having high-hardness rubber for side reinforcement disposed on the inside of a sidewall portion, and is allowed to run a predetermined distance to a service station even in a state such that internal pressure is decreased due to a blowout. The placement of this run flat tire causes no necessity of keeping a spare tire and thus a reduction in the mass of the whole vehicle can be expected. However, the velocity and running distance of the run flat tire is not said to be sufficient during a blowout, and thus an improvement in durability of the run flat tire has been desired.

Examples of an effective means for improving durability of the run flat tire include a method, in which the rubber for reinforcement is thickened to restrain deformation and breaking due to the deformation is prevented. However, the mass of the tire is increased, so that a reduction in mass as demand characteristics of the run flat tire cannot be achieved.

Further, examples of the effective means for improving durability of the run flat tire include a method, in which the amount of reinforcing fillers such as carbon black is increased and the fillers are added to increase the hardness of the rubber for reinforcement and then to restrain deformation. However, since a load on processes such as kneading and extruding is great and exothermic properties are increased in physical properties after vulcanization, an improvement in run flat durability cannot be expected so much.

In order to improve durability of the run flat tire, a vulcanizing agent and a vulcanization accelerator attempt to be used in a large amount without increasing the amount of carbon black. This technique can increase vulcanization density to restrain deformation and exothermic heat; however, elongation of the rubber is decreased to bring a tendency to decrease breaking strength. On the other hand, a technique is also proposed, in which a lamellar natural ore such as mica is blended with sidewall rubber of the tire. However, since flex resistance is required for a rubber composition, the lamellar natural ore is insufficient to support a load due to low hardness even though used as rubber for side reinforcement.

EP 1 707 595 A1 discloses a rubber composition containing 1 to 20 parts by weight of a $C_5$-based petroleum resin having a number average molecular weight of 300 to 10000 and 5 to 120 parts by weight of lamellar natural ore based on 100 parts by weight of a rubber component, which may be a blend of natural rubber, butadiene rubber and butadiene rubber including syndiotactic 1,2-polybutadiene.

On the other hand, Japanese Patent Laying-Open No. 2006-124503 discloses a rubber composition containing polybutadiene rubber including 2.5 to 20% by weight of a syndiotactic 1,2-polybutadiene crystal as a base tread rubber composition for the tire.

SUMMARY OF THE INVENTION

The present invention relates to a rubber composition for side reinforcement of a run flat tire, having low exothermic properties and high strength, and particularly provides a run flat tire, in which the composition is used for a side portion thereof to improve durability during a blowout condition, and increase a running distance and velocity.

The present invention is a rubber composition including a rubber component containing 20 to 80% by mass of styrene-butadiene rubber including 5 to 60% by mass of a syndiotactic 1,2-polybutadiene crystal, and 10 to 80% by mass of natural rubber and/or polyisoprene rubber, and carbon black blended in an amount of 10 to 80 parts by mass with 100 parts by mass of the rubber component.

The rubber composition preferably contains a C5-based petroleum resin having a number-average molecular weight of 300 to 10000, which is obtained by polymerizing C5-based petroleum hydrocarbon, in an amount of 0.5 to 10 parts by mass with respect to 100 parts by mass of the rubber component.

The present invention is a run flat tire including a side portion reinforcing layer and a bead apex made of the foregoing rubber composition. Then, characteristics of dynamic viscoelasticity of the rubber composition preferably satisfy the following relational expression:

$$E''/(E^*)^2 \leq 7.0 \times 10^{-9} Pa^{-1}$$

In the present invention, a rubber component containing 20 to 80% by mass of styrene-butadiene rubber including 5 to 60% by mass of a syndiotactic 1,2-polybutadiene crystal, and 10 to 80% by mass of natural rubber and/or polyisoprene rubber is used, to obtain a rubber composition having low exothermic properties and high strength. The rubber composition is used for a rubber composition for side reinforcement of a run flat tire, to obtain a run flat tire excellent in running durability during a blowout, namely, run flat properties.

The foregoing and other objects, features, aspects and advantages of the present invention will become more apparent from the following detailed description of the present invention when taken in conjunction with the accompanying drawings.

BRIEF DESCRIPTION OF THE DRAWINGS

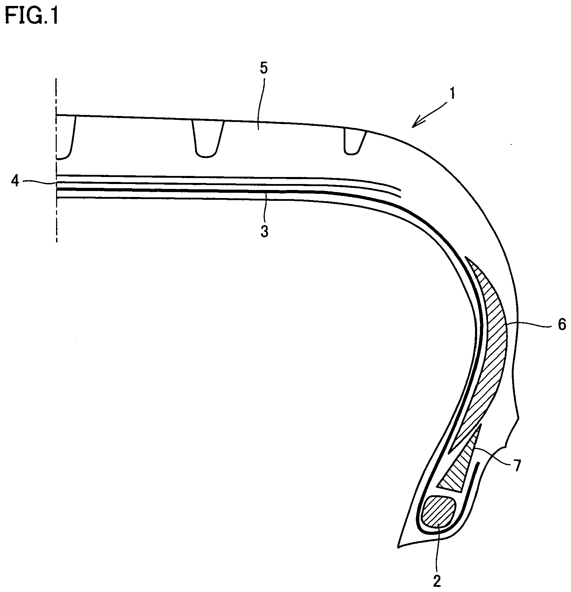

Fig. 1 shows the right half of a cross-sectional view of a run flat tire of the present invention.

DESCRIPTION OF THE PREFERRED EMBODIMENTS

The present invention is a tire rubber composition including a rubber component containing 20 to 80% by mass of styrene-butadiene rubber including 5 to 60% by mass of a syndiotactic 1,2-polybutadiene crystal, and 10 to 80% by mass of natural rubber and/or polyisoprene rubber, and carbon black blended in an amount of 10 to 80 parts by mass with 100 parts by mass of the rubber component.

<Rubber component>

In the present invention, the content of natural rubber (NR) and/or polyisoprene rubber (IR) in the rubber component is preferably 10 to 80% by mass. When the content of the natural rubber (NR) and/or polyisoprene rubber (IR) is less than 10% by mass, the elongation percentage of a rubber composition is low and productivity tends to be decreased. On the other hand, when the content in the rubber component exceeds 80% by mass, the rubber is deteriorated due to exothermic heat during run flat running and run flat performance tends to be decreased.

Next, in the present invention, styrene-butadiene rubber (hereinafter, also referred to as "SBR") including a syndiotactic 1,2-polybutadiene crystal (hereinafter, also referred to as "SPBd crystal") includes an SPBd crystal in an amount of 5 to 60% by mass, preferably 10 to 40% by mass. The case where the SPBd crystal is less than 5% by mass is not preferable because of insufficient strength. On the other hand, the case where the SPBd crystal exceeds 60% by mass is not preferable in handling because of deteriorated processability. An SBR including an SPBd crystal is contained in the rubber component in an amount of 20 to 80% by mass, and preferably 30 to 70% by mass. When the SBR including an SPBd crystal is less than 20% by mass, rigidity of the rubber composition can not be improved; on the other hand, when the SBR including an SPBd crystal exceeds 80% by mass, the elongation percentage is decreased and run flat property is decreased.

With regard to the production of an SBR including an SPBd crystal, for example, 1,3-butadiene is dissolved in an organic solvent such as hexane, and an SBR is added to and sufficiently dissolved in the resulting solution. The solution is reacted at a predetermined temperature by using, for example, triethyl aluminum, a cobalt octylate solution and carbon disulfide as polymerization catalysts, and thereafter dried under reduced pressure to obtain an SBR including an SPBd crystal. For example, U.S. Patent Publication No. 5283294 can be seen as a producing method thereof.

The content of the foregoing SPBd crystal can be measured from an extraction residue ratio when the crystal is extracted by n-hexane with a Soxhlet extractor.

In addition, in the present invention, as the rubber component, polybutadiene rubber (BR), syndiotactic-1,2-polybutadiene (1,2BR), styrene-butadiene copolymer rubber (SBR), acrylonitrile-butadiene copolymer rubber (NBR), chloroprene rubber (CR), styrene-isoprene-butadiene copolymer rubber (SIBR), styrene-isoprene copolymer rubber, isoprene-butadiene copolymer rubber, and the like, are used. One or two kinds of these rubber components are preferably mixed in a range of 20% by mass or less of the rubber component.

<C5-based petroleum resin>

In a rubber composition of the present invention, 0.5 to 10 parts by mass of a C5-based petroleum resin having a number-average molecular weight of 300 to 10000 is preferably blended. The C5-based petroleum resin is obtained by polymerizing petroleum hydrocarbon having 5 carbon atoms. The number-average molecular weight of the C5-based petroleum resin is preferably 600 to 2000 and the blending amount thereof is preferably 1.0 to 8.0 parts by mass with respect to 100 parts by mass of the rubber component. When the blending amount of the C5-based petroleum resin is less than 0.5 parts by mass, an improvement in run flat properties by addition is not to be sufficiently confirmed. On the other hand, when the blending amount of the C5-based petroleum resin exceeds 10 parts by mass, the rubber composition is softened and exothermic properties during run flat running is increased.

The petroleum hydrocarbon having 5 carbon atoms is a C5-based petroleum fraction. Examples thereof include diolefins such as isoprene, 1,3-pentadiene, dicyclopentadiene and piperylene, and monoolefins such as 2-methyl-1-butene, 2-methyl-2-butene and cyclopentene.

Further, the C5-based petroleum resin includes a modifier containing 50% by mass of aromatic olefins, such as styrene, o-methyl styrene, p-methyl styrene, p-tert-butyl styrene, 1,3-dimethyl styrene, $\alpha$-methyl styrene, vinylnaphthalene and vinylanthracene. Examples of commercial products of the C5-based petroleum resin include KRATON (manufactured by Zeon Corporation), MARUKAREZ (manufactured by Maruzen Petrochemical Co., Ltd.), ARKON (manufactured by Arakawa Chemical Industries, Ltd.), and the like.

<Carbon black>

Carbon black used for the present invention is not particularly limited and is preferably soft carbon such as FEF and FPF in order to maintain the rubber composition at low exothermic heat. For example, a nitrogen absorption specific surface area ($N_2SA$) is 30 $m^2$/g or more, preferably 35 $m^2$/g or more. When the $N_2SA$ is less than 30 $m^2$/g, reinforcement runs short, so that sufficient durability cannot be obtained. In addition, the $N_2SA$ of the carbon black is 100 $m^2$/g or less, preferably 80 $m^2$/g or less, and more preferably 60 $m^2$/g or less. When the $N_2SA$ exceeds 100 $m^2$/g, exothermic properties are increased.

The dibutyl phthalate oil absorption (DBP oil absorption) of the carbon black is 50 ml/100g or more, and preferably 80 ml/100g or more. When the DBP oil absorption is less than 50 ml/100g, sufficient reinforcement is difficult to be obtained.

The content of the carbon black is 10 parts by mass or more, preferably 20 parts by mass or more, and more preferably 30 parts by mass or more, with respect to 100 parts by mass of the rubber component. When the content of the carbon black is less than 10 parts by mass, sufficient rubber strength is not obtained. Further, the content of the carbon black is 80 parts by mass or less, preferably 70 parts by mass or less, and more preferably 60 parts by mass or less. When the carbon black is more than 80 parts by mass, blending viscosity is increased, kneading and extruding of the rubber become difficult, and additionally exothermic heat during run flat running is increased.

<Blending agent>

Sulfur or a sulfur compound used for the rubber composition of the present invention is preferably insoluble sulfur from the viewpoint of restraining the surface precipitation of sulfur. With regard to the insoluble sulfur, the average molecular weight thereof is preferably 10000 or more, and particularly preferably 100000 or more, and preferably 500000 or less, and particularly preferably 300000 or less. When the average molecular weight of the insoluble sulfur is less than 10000, decomposition at a low temperature easily occurs and surface precipitation easily tends to occur. On the other hand, when the average molecular weight exceeds 500000, dispersibility in the rubber tends to be decreased.

The blending amount of sulfur or a sulfur compound is preferably 2 parts by mass or more, and more preferably 3 parts by mass or more and preferably 10 parts by mass or less, and more preferably 8 parts by mass or less. When the sulfur or a sulfur compound is less than 2 parts by mass, sufficient hardness tends not to be obtained, while when the sulfur or a sulfur compound exceeds 10 parts by mass, storage stability of unvulcanized rubber tends to be deteriorated.

In addition, the rubber composition for side reinforcement of the present invention may contain zinc oxide, a wax, stearic acid, oil, an antioxidant, a vulcanization accelerator, and the like, used for ordinary rubber blending without deteriorating the effect of the present invention.

With regard to the foregoing vulcanization accelerator, for example, a sulfenamide-based accelerator is used most frequently as a delayed vulcanization accelerator since the sulfenamide-based accelerator is difficult to cause scorching in production processes and is excellent in vulcanizing characteristics. Further, rubber blending using the sulfenamide-based accelerator improves durability of a run flat tire since exothermic properties against deformation by external force is low in rubber physical properties after vulcanization.

Examples of the sulfenamide-based accelerator include TBBS (N-tert-butyl-2-benzothiazolylsulfenamide), CBS (N-cyclohexyl-2-benzothiazolylsulfenamide), DZ (N,N'-dicyclohexyl-2-benzothiazolylsulfenamide), and the like. Examples of other vulcanization accelerators include MBT (mercaptobenzothiazole), MBTS (dibenzothiazyl disulfide), DPG (diphenylguanidine), and the like.

<Reinforcing agent>

As the rubber composition of the present invention, silica used for general-purpose rubber can be used. Examples thereof include dry-method white carbon, wet-method white carbon, colloidal silica, and the like, used as reinforcing materials. The wet-method white carbon containing hydrous silicic acid as a main component is preferable among them.

With regard to the present invention, a lamellar natural ore, for example, mica such as kaolinite, sericite, phlogopite, and muscovite can further be blended. Here, the aspect ratio (ratio of maximum diameter to thickness) of the lamellar natural ore is preferably 3 or more in view of increasing rubber hardness. The foregoing lamellar natural ore having an average particle diameter of 2 $\mu$m or more and 30 $\mu$m or less is appropriately used. The blending amount thereof is in a range of 5 to 120 parts by mass with respect to 100 parts by mass of the rubber component.

With regard to the present invention, a silane coupling agent can be added together with the foregoing silica or the foregoing lamellar natural ore. Examples of the silane coupling agent include bis(3-triethoxysilylpropyl)tetrasulfide, bis(3-trimethoxysilylpropyl)tetrasulfide, bis(2-triethoxysilylpropyl)tetrasulfide, 3-mercaptopropyltriethoxysilane, 2-mercaptoethyltrimetoxysilane, and the like. The blending amount of the silane coupling agent is in a range of 2 to 20 parts by mass with respect to 100 parts by mass of silica and/or lamellar natural ore.

<Viscoelasticity characteristics of rubber composition>

Loss elastic modulus (E") and complex elastic modulus (E*) of the rubber composition preferably satisfy the following expression:

$$E''/(E^*)^2 \leq 7.0 \times 10^{-9}\,Pa^{-1}.$$

In particular, $E''/(E^*)^2 \leq 6.0 \times 10^{-9}$ Pa$^{-1}$ is preferable. When $E''/(E^*)^2$ exceeds $7.0 \times 10^{-9}$ Pa$^{-1}$, there is a tendency to increase exothermic heat by deformation during run flat and promote heat deterioration of the rubber, resulting in breaking.

<Run flat tire>

The rubber composition of the present invention is used for a side portion reinforcing layer or a bead apex of a run flat tire. Here, the rubber for side reinforcement is a rubber layer disposed on the inside of a sidewall portion of the run flat tire, and the bead apex is a rubber layer extending from the upside of a bead core in the sidewall direction. In the run flat tire, the presence of the side portion reinforcing layer and/or the bead apex allows a vehicle to be supported without dislocation of the tire from a rim even in a state such that internal pressure is decreased, so that excellent run flat durability is obtained.

Fig. 1 shows the right half of a cross-sectional view of a run flat tire 1 of the present invention. In Fig. 1, run flat tire 1 is provided with a toroid-shaped carcass 3 engaged with a pair of bead cores 2 with both ends folded therearound, a breaker 4 disposed on the outside of a crown portion of carcass 3, such that a two-ply breaker, in which cords are arrayed at an angle of 5 to 30° in the tire circumference direction, is disposed so that the cords are crossed, and a tread portion 5 on the outside of breaker 4. Then, in the side portion, a side portion reinforcing layer 6 for gradually decreasing the thickness from the sidewall middle portion in the both end directions is disposed between carcass 3 and the sidewall. In addition, a bead apex 7 made of hard rubber is disposed from the upside of bead core 2 in the sidewall direction. The present invention adopts the above-described specific rubber composition for the above-described side portion reinforcing layer.

In Fig. 1, side portion reinforcing layer 6 is disposed on the outside of carcass 3 and yet can also be disposed on the inside of carcass 3, namely, on the cavity side thereof. Also, side portion reinforcing layer 6 and bead apex 7 can be integrated into a side portion reinforcing layer 6 extending from the upside of bead core 2 to the neighborhood of both ends of breaker 4.

Examples

Hereinafter, the present invention will be described specifically on the basis of Examples, but the present invention is not limited thereto. Materials used in Examples and Comparative Examples are shown together below.

Examples 1 and 2 and Comparative Examples 1 to 4

<Production of SBR including SPBd crystal>

(1) SBR-2 including SPBd crystal

250 g of 1,3-butadiene was dissolved in 8000 ml of a hexane solution, and 1000 g of an SBR ("SL574", manufactured by JSR Corporation) was added to and sufficiently dissolved in the resulting solution. 500 ml of 0.2 M triisopropyl aluminum, 20 ml of a 0.042 M cobalt octylate solution and 15 ml of carbon disulfide as polymerization catalysts were added to the solution and the mixture was reacted at 40°C for 8 hours, and thereafter dried under reduced pressure to obtain 1135 g of an SBR-2 including an SPBd crystal. The content thereof was 12% by mass.
Here, the content of the SPBd crystal was measured by the foregoing extraction residue ratio.

(2) SBR-3 including SPBd crystal

An SBR-3 including an SPBd crystal having a content of 70% by mass was produced in conformance with the method for producing the SBR-2 including an SPBd crystal.

<Production of rubber composition and run flat tire>

Components except insoluble sulfur and a vulcanization accelerator were kneaded at 160°C for 5 minutes by using a banbury mixer in accordance with blending recipe shown in Table 1. Insoluble sulfur and a vulcanization accelerator were added to the obtained kneaded product and the resulting mixture was kneaded at 120°C for 2 minutes by using a banbury mixer to obtain an unvulcanized rubber composition. In addition, the unvulcanized rubber composition was extruded into a tape shape having a width of 3 cm and a thickness of 1 mm, wound spirally around the shape of a side portion reinforcing layer of a run flat tire, stuck together with other tire components, and molded into an unvulcanized tire. The molded product was subjected to press vulcanization at 175°C for 20 minutes to produce a run flat tire having a structure shown in Fig. 1. The basic structures of run flat tires of Examples 1 to 6 and Comparative Examples 1 to 7 are the same and the tire size is 245/40ZR18.
Each of the following evaluations was performed. The results of evaluating are shown in Table 1.

Table 1

| | | Examples | | | | | | Comparative Examples | | | | | | |
|---|---|---|---|---|---|---|---|---|---|---|---|---|---|---|
| | | 1 | 2 | 3 | 4 | 5 | 6 | 1 | 2 | 3 | 4 | 5 | 6 | 7 |
| NR | (Note1) | 70 | 40 | 40 | 40 | 40 | 40 | 95 | 5 | 40 | 40 | 40 | 40 | 40 |
| SBR-1 | (Note2) | - | - | - | - | - | - | - | - | - | - | 60 | 60 | - |
| SBR-2 | (Note3) | 30 | 60 | 60 | 60 | 60 | 60 | 5 | 95 | 60 | 60 | - | - | - |
| SBR-3 | (Note4) | - | - | - | - | - | - | - | - | - | - | - | - | 60 |
| Carbon black | (Note5) | 60 | 40 | 60 | 60 | 60 | 60 | 40 | 40 | 100 | 5 | 40 | 40 | 40 |
| Calcium carbonate | (Note6) | - | - | - | - | - | - | - | - | - | 55 | - | - | - |
| C5 resin | (Note7) | - | - | - | 2 | 6 | 15 | - | - | - | - | - | - | - |
| Stearic acid | (Note8) | 2 | 2 | 2 | 2 | 2 | 2 | 2 | 2 | 2 | 2 | 2 | 2 | 2 |
| Zinc flower | (Note9) | 3 | 3 | 3 | 3 | 3 | 3 | 3 | 3 | 3 | 3 | 3 | 3 | 3 |
| Antioxidant | (Note10) | 2 | 2 | 2 | 2 | 2 | 2 | 2 | 2 | 2 | 2 | 2 | 2 | 2 |
| Insoluble sulfur | (Note11) | 5.5 | 5.5 | 5.5 | 5.5 | 5.5 | 5.5 | 5.5 | 5.5 | 5.5 | 5.5 | 5.5 | 5.5 | 5.5 |
| Accelerator NS | (Note12) | 2 | 2 | 2 | 2 | 2 | 2 | 2 | 2 | 2 | 2 | 2 | 2 | 2 |
| Run flat performance | | 115 | 120 | 125 | 130 | 130 | 100 | 90 | 95 | 90 | 40 | 100 | 110 | 30 |
| Reinforcing layer thickness (mm) | | 8 | 8 | 8 | 8 | 8 | 8 | 8 | 8 | 8 | 8 | 8 | 12 | 8 |
| Mass difference (g) | | 10 | 0 | 10 | 10 | 10 | -20 | 0 | 0 | 90 | 30 | 0 | 940 | 0 |

(continued)

| | Examples | | | | | | Comparative Examples | | | | | | |
|---|---|---|---|---|---|---|---|---|---|---|---|---|---|
| | 1 | 2 | 3 | 4 | 5 | 6 | 1 | 2 | 3 | 4 | 5 | 6 | 7 |
| E"/(E*)$^2$×10$^{-9}$ Pa$^{-1}$ | 5.2 | 5.1 | 4.9 | 5.1 | 5.3 | 7.1 | 5.9 | 5.2 | 4.1 | 5.0 | 5.6 | 5.6 | 3.1 |

(Note 1) NR: RSS#3 (Note 2) SBR-1: trade name "SL574", manufactured by JSR Corporation (the content of a syndiotactic 1,2-polybutadiene crystal is 0% by mass) (Note 3) SBR-2: SBR obtained by modifying "SL574", manufactured by JSR Corporation (the content of a syndiotactic 1,2-polybutadiene crystal is 12% by mass) (Note 4) SBR-3: SBR obtained by modifying "SL574", manufactured by JSR Corporation (the content of a syndiotactic 1,2-polybutadiene crystal is 70% by mass) (Note 5) carbon black (FEF): DIABLACK E, manufactured by Mitsubishi Chemical Corporation (N$_2$SA: 41 m$^2$/g, DBP oil absorption: 115 ml/100g) (Note 6) calcium carbonate: HAKUENKA CC, manufactured by Shiraishi Kogyo Kaisha, Ltd.

(Note 7) C5 resin: C5-based petroleum resin "MARUKAREZ T-100A", manufactured by Maruzen Petrochemical Co., Ltd., having a number-average molecular weight of 1200. The number-average molecular weight was determined relative to polystyrene standards by gel permeation chromatography (GPC). The measurement conditions of GPC are as follows.

Column: TSKGEL SUPERMULTPOR EHZ-M, manufactured by Tosoh Corporation two columns Detector: RI, manufactured by Tosoh Corporation (40°C) Flow rate: 0.35 ml/min in THF Pressure: 3.1 to 3.2 MPa Mobile phase: 1% THF Apparatus: HLC-2030, manufactured by Tosoh Corporation (Note 8) stearic acid: Tsubaki, manufactured by Nippon Oil & Fats Co., Ltd.

(Note 9) zinc oxide: two kinds of zinc oxides, manufactured by Mitsui Mining and Smelting Co., Ltd.

(Note 10) antioxidant: antigen 6C, N-(1,3-dimethylbutyl)-N'-phenyl-para-phenylenediamine, manufactured by Sumitomo Chemical Co., Ltd.

(Note 11) insoluble sulfur: Mu-cron OT, manufactured by Shikoku Chemicals Corporation.

(Note 12) vulcanization accelerator: Nocceler NS (N-tert-butyl-2-benzothiazolylsulfenamide), manufactured by Ouchi Shinko Chemical Industrial Co., Ltd.

<Run flat performance>

The tire was made to run on a drum at a velocity of 80 km/h and an air internal pressure of 0 kPa to a measure running distance at the time when the tire was broken. Each of the running distances was denoted with an index by the following expression, regarding Comparative Example 5 as a standard (100). Larger numerical value denotes more excellent run flat durability.

$$\text{Run flat performance index} = (\text{running distance of each blending} / \text{running distance of Comparative Example 5}) \times 100$$

<Reinforcing layer thickness>

The maximum thickness of a side portion reinforcing layer of a sidewall portion was measured.

<Viscoelasticity characteristics>

A rubber test piece of predetermined size was cut out of a side portion reinforcing layer of the run flat tire to measure loss elastic modulus (E") and complex elastic modulus (E*) at a measured temperature of 70°C, an initial strain of 10%, a dynamic strain of ±1% and a frequency of 10 Hz by using a viscoelastic spectrometer manufactured by Iwamoto Manufacturing Co., Ltd., whereby E"/(E*)$^2$ was calculated.

<Mass difference>

The difference in mass with each tire was measured, regarding the mass (12.60 Kg) of the tire of Comparative Example 1 as a standard. It is preferable that larger negative numerical value denotes lighter mass.

<Evaluation results>

Examples 1 to 6 are improved in run flat properties. In particular, Example 4 wherein a C5 resin was blended in an amount of 2 parts by mass and Example 5 wherein C5 resin was blended in an amount of 6 parts by mass are excellent in run flat properties. Also, the run flat tire wherein the rubber composition of the present invention was used for a side portion reinforcing layer can be improved in run flat properties while reducing mass.

The present invention is a rubber composition for side reinforcement excellent in run flat performance and a run flat tire using the same, and can be applied to not merely tires for passenger cars but also tires for light trucks and tires for trucks and buses.

Although the present invention has been described and illustrated in detail, it is clearly understood that the same is by way of illustration and example only and is not to be taken by way of limitation, the scope of the present invention being interpreted by the terms of the appended claims.

## Claims

1. A rubber composition comprising a rubber component containing 20 to 80% by mass of styrene-butadiene rubber including 5 to 60% by mass of syndiotactic 1,2-polybutadiene crystal, and 10 to 80% by mass of natural rubber and/or polyisoprene rubber, and carbon black blended in an amount of 10 to 80 parts by mass with 100 parts by mass of the rubber component.

2. The rubber composition according to claim 1, comprising a C5-based petroleum resin having a number-average molecular weight of 300 to 10000 blended in an amount of 0.5 to 10 parts by mass with 100 parts by mass of the rubber component.

3. A run flat tire comprising a side portion reinforcing layer and a bead apex, made of the rubber composition according to claim 1.

4. The run flat tire according to claim 3, wherein characteristics of dynamic viscoelasticity of the rubber composition satisfy the following relational expression, wherein E″ is the loss elastic modulus and E* is the complex elastic modulus, both measured according to the method as defined in the description,

$$E''/(E^*)^2 \leq 7.0 \times 10^{-9} \, Pa^{-1}.$$

## Patentansprüche

1. Kautschukzusammensetzung, umfassend eine Kautschukkomponente, die 20 bis 80 Massen-% Styrol-Butadien-Kautschuk, einschließlich 5 bis 60 Massen-% syndiotaktischen 1,2-Polybutadienkristall, und 10 bis 80 Massen-% Naturkautschuk und/oder Polyisoprenkautschuk enthält, und Ruß, der in einer Menge von 10 bis 80 Massenteilen mit 100 Massenteilen der Kautschukkomponente vermischt ist.

2. Kautschukzusammensetzung nach Anspruch 1, umfassend ein C5-basiertes Petroleumharz mit einem zahlenmittleren Molekulargewicht von 300 bis 10000, das in einer Menge von 0,5 bis 10 Massenteilen mit 100 Massenteilen der Kautschukkomponente gemischt ist.

3. Notlaufreifen mit einer Seitenabschnittverstärkungsschicht und einem Wulstkernreiter, hergestellt aus der Kautschukzusammensetzung nach Anspruch 1.

4. Notlaufreifen nach Anspruch 3, wobei Charakteristiken der dynamischen Viskoelastizität der Kautschukzusammensetzung den folgenden relationalen Ausdruck erfüllen, wobei E″ der Verlust-Elastizitätsmodul ist und E* der komplexe Elastizitätsmodul ist, die beide nach dem in der Beschreibung definierten Verfahren gemessen sind:

$$E''/(E^*)^2 \leq 7{,}0 \times 10^{-9}\,Pa^{-1}.$$

**Revendications**

1. Composition de caoutchouc comprenant un constituant de caoutchouc contenant de 20 à 80 % en masse de caoutchouc de styrène-butadiène incluant de 5 à 60 % en masse de cristal de 1,2-polybutadiène syndiotactique, et de 10 à 80 % en masse de caoutchouc naturel et/ou de caoutchouc de polyisoprène, et du noir de carbone combiné dans une quantité de 10 à 80 parties en masse avec 100 parties en masse du constituant de caoutchouc.

2. Composition de caoutchouc selon la revendication 1, comprenant une résine de pétrole de base C5 ayant une masse moléculaire moyenne en nombre de 300 à 10 000 combinée dans une quantité de 0,5 à 10 parties en masse avec 100 parties en masse du constituant de caoutchouc.

3. Pneu à roulage à plat comprenant une couche de renforcement de flanc et un apex de talon, constitué de la composition de caoutchouc selon la revendication 1.

4. Pneu à roulage à plat selon la revendication 3, dans lequel les caractéristiques de viscoélasticité dynamique de la composition de caoutchouc satisfont l'expression relationnelle suivante, où E'' est le module élastique de perte et E* est le module élastique complexe, tous deux mesurés selon le procédé comme défini dans la description :

$$E''/(E^*)^2 \leq 7{,}0 \times 10^{-9}\,Pa^{-1}.$$

FIG.1

**EP 2 019 125 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1707595 A1
- JP 2006124503 A
- US 5283294 A